# EUROPEAN PATENT SPECIFICATION

(11) **EP 2 528 405 B1**
(45) Date of publication and mention of the grant of the patent: **02.08.2017**
(21) Application number: 12004024.1
(22) Date of filing: 23.05.2012
(51) Int. Cl.: H04W 76/04, H04W 72/04

(54) **Method and apparatus to improve inter-band carrier aggregation in TDD Time Division Duplex mode**
Verfahren und Vorrichtung zur Verbesserung der Aggregation von Trägern in verschiedenen Frequenz-Bändern im TDD Zeitteilungsduplex-Modus
Procédé et appareil pour améliorer l'aggrégation de porteuses de différentes bandes de fréquences en mode duplex par division temporelle TDD.

(30) Priority: 23.05.2011 US 201161489003 P; 04.05.2012 US 201213464472
(43) Date of publication of application: 28.11.2012
(73) Proprietor: Innovative Sonic Corporation, Taipei City 11491 (TW)
(72) Inventor: Kuo, Richard, Lee-Chee, Taipei City 11491 (TW); Tseng, Li-Chih, Taipei City 11491 (TW); Lin, Ko-Chiang, Taipei City 11491 (TW)
(74) Representative: Hoefer & Partner Patentanwälte mbB

(56) References cited:
- EP-A1- 2 521 415
- US-A1- 2010 322 173
- US-A1- 2011 002 281
- LIU JINGXIU ET AL: "On the impact of realistic control channel constraints in UTRAN LTE TDD system", COMMUNICATIONS (APCC), 2010 16TH ASIA-PACIFIC CONFERENCE ON, IEEE, PISCATAWAY, NJ, USA, 31 October 2010 (2010-10-31), pages 1-5, XP031843451, ISBN: 978-1-4244-8128-6
- ERICSSON ET AL: "Different TDD configurations in inter-band CA", 3GPP DRAFT; R2-120465 DIFFERENT TDD CONFIGURATIONS IN CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565401, [retrieved on 2012-01-31]

## Description

### FIELD

This disclosure generally relates to wireless communication networks, and more particularly, to a method and apparatus to improve inter-band carrier aggregation (CA) in TDD (Time Division Duplex) mode.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

US 2010/0322173 A1 describes a method and apparatus for operating a wireless transmit/receive unit (WTRU) in a discontinuous reception (DRX) mode employing carrier aggregation. In one scenario, a physical downlink (DL) shared channel (PDSCH) is received on a DL component carrier (CC) of a particular serving cell during a cell-specific active time, whereby the DL CC is associated with an uplink (UL) CC. Then, a physical DL control channel (PDCCH) is monitored for DL assignments for the particular serving cell, and UL grants for the UL CC, during the cell-specific active time. In another scenario, a first subset of CCs is configured for PDCCH reception, and a second subset of the CCs is not configured for PDCCH reception. DRX is applied to at least one CC in the second subset based on a PDCCH active time of at least one of the CCs in the first subset. Further, Liu Jingxiu et al.: "On the Impact of Realistic Control Channel Constraints in UTRAN LTE TDD System", IEEE, focuses on the Physical Downlink Control Channel (PDCCH) and describes the impact of its realistic constraints on the performance in E-UTRAN LTE TDD system, particularly considering the asymmetric slot resources between downlink and uplink. It is described, when adopting the same PDCCH manager framework in LTE FDD system as in LTE FDD system, the uplink users are not prioritized sufficiently regarding less uplink subframe under most of TDD UL/DL configurations. Therefore, it is proposed, the joint list in the PDCCH manager framework can be adjusted semi-statically to perfectly match TDD UL/DL configurations, and assuming ideal traffic monitoring this can furthermore provide more freedom and flexibility for wider range of UL/DL service requirement, without changing the overall TDD UL/DL configurations. The simulation results proved that the TDD-oriented PDCCH framework can satisfy UL/DL traffic requirement via exploiting the flexibility of joint list based on semi-statistically monitoring and adjustment. Still further, in US 2011/0002281 A1 discontinuous reception (DRX) operations for wireless communications implementing carrier aggregation are disclosed. Physical downlink control channel implementation for carrier aggregation is also disclosed. DRX methods are disclosed including a common DRX protocol that may be applied across all component carriers, an individual/independent DRX protocol that is applied on each component carrier, and hybrid approaches that are applied across affected component carriers. Methods for addressing the effects of loss of synchronization on DRX, impact of scheduling request on DRX, uplink power control during DRX, and DRX operation in measurement gaps are disclosed. Still further, EP 2 521 415 A1 discloses a method and apparatus for performing DRX operation in a mobile communication system with carrier aggregation, wherein the PCell and SCells having different TDD UL-DL configurations. According to this disclosure, the subframes to monitor PDCCH are determined according to all configured cells while PDCCH monitoring only takes place in activated cells.

### SUMMARY

A method and apparatus respectively according to claims 1 and 10 are disclosed to improve inter-band carrier aggregation (CA) in a UE (User Equipment) in TDD (Time Division Duplex) mode. In one embodiment, the method includes connecting the UE with a PCell (Primary Serving Cell). The method further includes configuring the UE with at least one SCell (Secondary Serving Cell), among which at least one SCell is deactivated, wherein TDD UL-DL (Uplink-Downlink) configurations of the PCell and the at least one SCell may be different. The method also includes taking a TDD UL-DL configuration of an activated serving cell into consideration for defining consecutive PDCCH (Physical Downlink Control Channel) subframes of a *drx-InactivityTimer,* and not taking a TDD UL-DL configuration of a deactivated serving cell into consideration, wherein PDCCH subframes for defining the *drx-InactivityTimer* are equal to a union of PDCCH subframes of all activated serving cells. Further embodiments are according to the dependent claim.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 illustrates a flow chart in accordance with one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. RP-110451, "WID: LTE carrier aggregation enhancements"; TS 36.211 V10.1.0, "E-UTRA Physical channel and modulation"; TS 36.321 V10.1.0, "MAC protocol specification (Release 10)"; and TS 36.331 V10.1.0, "RRC protocol specification (Release 10)".

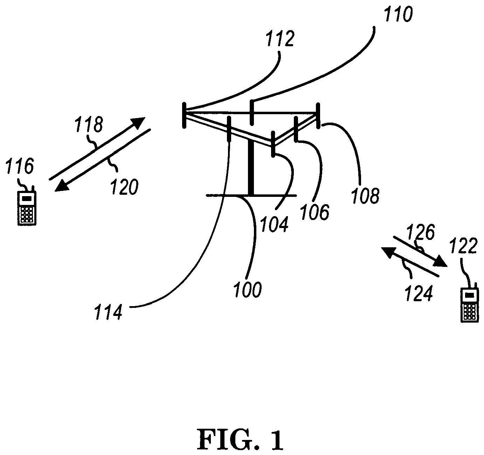

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

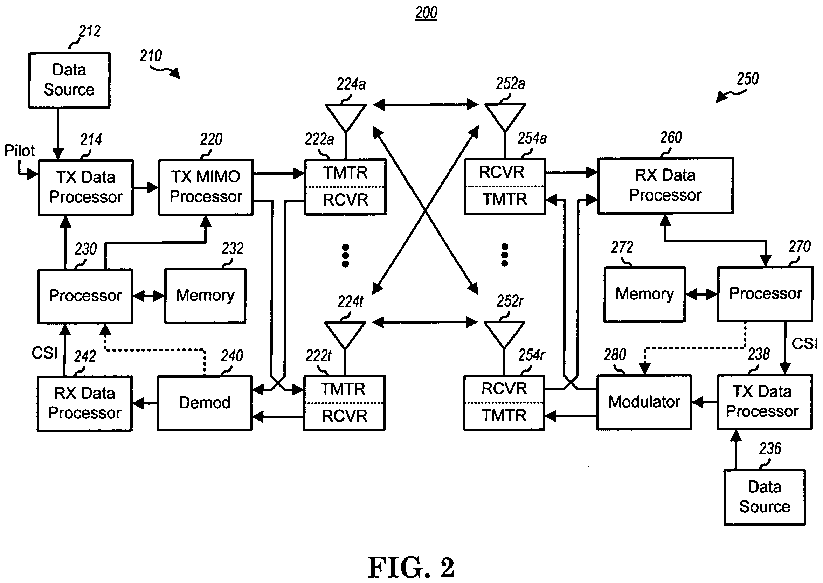

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

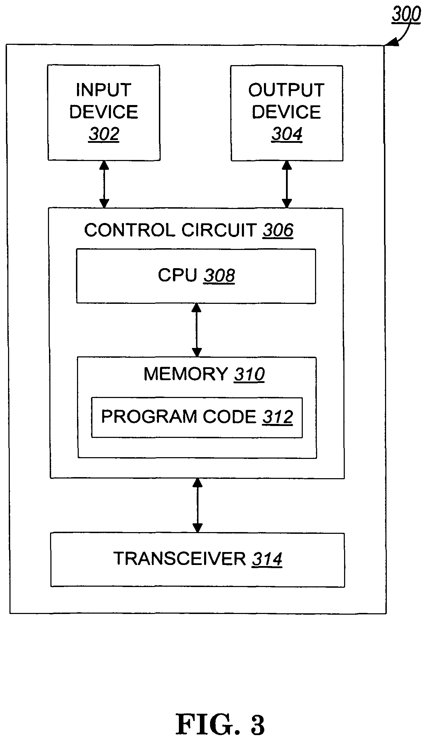

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

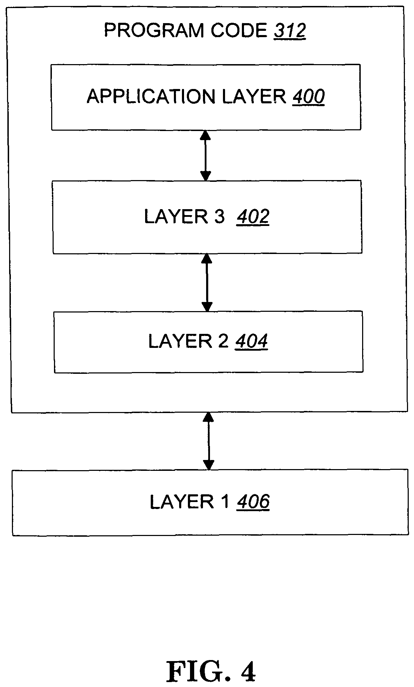

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

As discussed in 3GPP RP-110451, a work item (WI) for LTE carrier aggregation (CA) enhancement was agreed at RAN#51 meeting. Two objectives of the WI are:
(i) Support of the use of multiple timing advances in case of LTE uplink carrier aggregation; and
(ii) Support of inter-band carrier aggregation for TDD (Time Division Duplex) DL (Downlink) and UL (Uplink) including different uplink-downlink configurations on different bands.

As discussed in 3GPP TS 36.211, the subframe structures of TDD uplink-downlink configurations are shown in Table 1 below.

**Table 1: TDD UL-DL configurations**

| Uplink-downlink configuration | Downlink-to-Uplink Switch-point periodicity | Subframe number | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 1 above, for each subframe in a radio frame, "D" denotes the subframe is reserved for downlink transmissions, "U" denotes the subframe is reserved for uplink transmissions, and "S" denotes a special subframe with the three fields DwPTS (Downlink Pilot Time Slot), GP (Guard Period), and UpPTS (Uplink Pilot Time Slot).

Furthermore, Section 3.1 of TS 36.321 discusses discontinuous reception (DRX operation) as follows:
- *Active Time* is time related to DRX operation, during which the UE monitors the PDCCH in PDCCH-subframes.
- *drx-InactivityTimer* specifies the number of consecutive PDCCH-subframe(s) after successfully decoding a PDCCH indicating an initial UL or DL user data transmission for this UE.
- *drx*-*RetransmissionTimer* specifies the maximum number of consecutive PDCCH-subframe(s) for as soon as a DL retransmission is expected by the UE.
- *onDurationTimer* specifies the number of consecutive PDCCH-subframe(s) at the beginning of a DRX Cycle.
- *PDCCH-subframe* refers to a subframe with PDCCH (Physical Downlink Control Channel) or, for an RN (Relay Node) with R-PDCCH (Reverse Packet Data Control Channel) configured and not suspended, to a subframe with R-PDCCH. For FDD UE operation, this represents any subframe; for TDD, only downlink subframes and subframes including DwPTS (Downlink Pilot Time Slot). For RNs with an RN subframe configuration configured and not suspended, in its communication with the E-UTRAN, this represents all downlink subframes configured for RN communication with the E-UTRAN

U.S. Provisional Patent Application Serial No. 61/483,487 and U.S. Patent Application Serial No. 13/464,472 address an issue related to DRX timers when different TDD UL-DL configurations are aggregated in a UE. In general, the issue is about the definition of consecutive PDCCH-subframes for a DRX timer (e.g., *onDurationTimer, drx-InactivityTimer,* and *drx-RetransmissionTimer*). The applications propose several methods for defining consecutive PDCCH-subframes of a DRX timer when only one DRX configuration is being applied for CA. The proposed methods did not consider the activation/deactivation status of a SCell.

In certain cases, it may not be proper to refer to the TDD UL-DL configuration of a deactivated SCell when defining the consecutive PDCCH-subframes for a DRX timer because a UE would not be scheduled in the PDCCH subframes of a deactivated SCell if there is no other activated cell with PDCCH subframes overlapping with PDCCH subframes of the deactivated SCell, according to TS 36.321. Thus, taking TDD UL-DL configuration of a deactivated SCell into consideration may reduce the scheduling opportunities for the UE because the DRX timer is decreased during PDCCH subframes of a deactivated SCell while these PDCCH subframes cannot be scheduled, especially in the case of the *drx-InactivityTimer.* There is probably no such concern for *onDurationTimer* and *drx-RetransmissionTimer.*

As discussed in TS 36.321, the *drx*-*InactivityTimer* specifies, in general, the number of consecutive PDCCH-subframes a UE needs to monitor after successfully decoding a PDCCH indicating an initial UL or DL user data transmission for the UE. And, it could be expected that eNB may schedule the UE in any PDCCH subframe of any activated serving cell which is configured with a PDCCH. Thus, it would be reasonable to consider the TDD UL-DL configurations of all activated serving cells with a PDCCH when defining the consecutive PDCCH subframes for the *drx-InactivityTimer.*

Furthermore, the main purpose of an *onDurationTimer* is, in general, for UE to monitor PDCCH periodically so that eNB can start a DL transmission after some inactive period, as discussed in TS 36.321. To achieve this purpose, it would be sufficient that *onDurationTimer* would be defined based on the TDD UL-DL configuration of the PCell. For most of the time only the PCell will remain activated. Thus, this method is simple and sufficient. A potential concern would be that eNB may not be able to send a PDCCH transmission on an activated SCell during the On_Duration period.

Since there is one *drx-RetransmissionTimer* per HARQ process and different serving cells own different HARQ processes (as discussed in TS 36.321), it would be reasonable for the *drx*-*RetransmissionTimer* to refer to the TDD UL-DL configuration of the corresponding serving cell or the scheduling cell of the corresponding serving cell. Furthermore, it would better to stop the *drx-RetransmissionTimer* when the corresponding serving cell or the scheduling cell of the corresponding serving cell is deactivated.

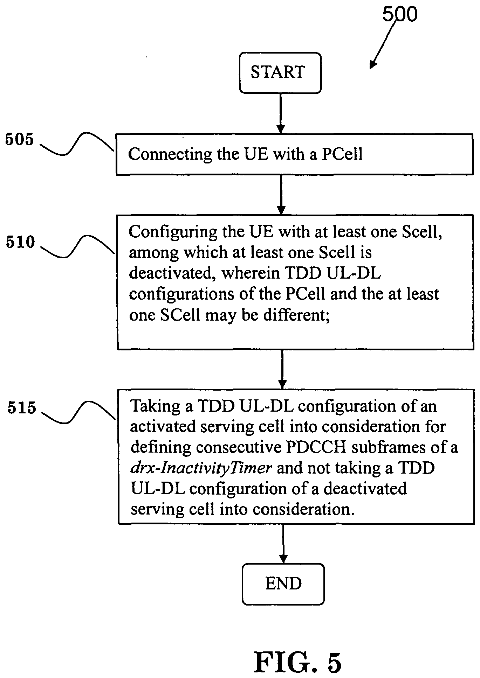

FIG. 5 illustrates a flow chart 500 in accordance with one exemplary embodiment. In step 505, the UE is being connected with a PCell. In one embodiment, the PCell is always activated. In step 510, the UE is being configured with one or more SCell. These SCells include at least one SCell that has been deactivated. Furthermore, the TDD UL-DL configurations of the connected PCell and the configured SCell may be different. In one embodiment, the SCell(s) could be activated or deactivated via an Activation/Deactivation MAC (Medium Access Control) control element (CE).

Returning to FIG. 5, in step 515, TDD UL-DL configuration(s) of activated serving cell(s) are taken into consideration in defining consecutive PDCCH subframes of a *drx-InactivityTimer.* However, TDD UL-DL configuration(s) of deactivated serving cell(s) are not taken into consideration. In one embodiment, the activated serving cell(s), which are considered for defining consecutive PDCCH subframes of the *drx-InactivityTimer,* are configured with a PDCCH. Furthermore, the PDCCH subframes for defining the *drx-InactivityTimer* are equal to the union of PDCCH subframes of all activated serving cells. In addition, the consecutive PDCCH subframes of a *drx-RetransmissionTimer* could be defined based on a TDD UL-DL configuration of a serving cell or a scheduling cell of a serving cell which owns the HARQ process associated with the *drx*-*RetransmissionTimer*. Furthermore, the *drx-RetransmissionTimer* is stopped when the corresponding SCell or the corresponding scheduling cell is deactivated. Also, the consecutive PDCCH subframes of an *onDurationTimer* could be defined based on a TDD UL-DL configuration of the connected PCell.

Referring back to FIGS. 3 and 4, the UE 300 includes a program code 312 stored in memory 310. In one embodiment, the CPU 308 could execute the program code 312 to (i) connect the UE with a PCell (Primary Serving Cell), (ii) configure the UE with at least one SCell (Secondary Serving Cell), among which at least one SCell is deactivated, wherein TDD UL-DL (Uplink-Downlink) configurations of the PCell and the at least one SCell may be different, and (iii) to take a TDD UL-DL configuration of an activated serving cell into consideration for defining consecutive PDCCH (Physical Downlink Control Channel) subframes of a *drx-InactivityTimer,* and not take a TDD UL-DL configuration of a deactivated serving cell into consideration.

In addition, the CPU 308 can execute the program code 312 to perform all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

## Claims

1. A method for inter-band carrier aggregation in a User Equipment, in the following also referred to as UE, in Time Division Duplex, in the following also referred to as TDD, mode, comprising:
connecting the UE with a Primary Serving Cell, in the following also referred to as PCell, (505);
configuring the UE with at least one Secondary Serving Cell, in the following also referred to as SCell, among which at least one SCell is deactivated, wherein TDD Uplink-Downlink, in the following also referred to as UL-DL, configurations of the PCell and the at least one SCell may be different (510); and
taking a TDD UL-DL configuration of an activated serving cell into consideration for defining consecutive Physical Downlink Control Channel, in the following also referred to as PDCCH, subframes of a *drx-InactivityTimer,* and not taking a TDD UL-DL configuration of a deactivated serving cell into consideration (515), wherein PDCCH subframes for defining the *drx*-*InactivityTimer* are equal to a union of PDCCH subframes of all activated serving cells.

2. The method of claim 1, wherein the activated serving cell taken into consideration for defining consecutive PDCCH subframes of the *drx-InactivityTimer* is configured with a PDCCH.

3. The method of claims 1 or 2, further comprising:
defining consecutive PDCCH subframes of an *onDurationTimer* based on a TDD UL-DL configuration of the PCell.

4. The method of any one of claims 1 to 3, further comprising:
defining consecutive PDCCH subframes of a *drx*-*RetransmissionTimer* based on a TDD UL-DL configuration of a serving cell which owns a HARQ process associated with the *drx*-*RetransmissionTimer*.

5. The method of any one of claims 1 to 3, further comprising:
defining consecutive PDCCH subframes of a *drx*-*RetransmissionTimer* based on a TDD UL-DL configuration of a scheduling cell of a serving cell which owns an HARQ process associated with *drx*-*RetransmissionTimer*.

6. The method of claim 4, wherein the *drx*-*RetransmissionTimer* is stopped when the corresponding SCell is deactivated.

7. The method of claim 5, wherein the *drx*-*RetransmissionTimer* is stopped when the scheduling cell is deactivated.

8. The method of any one of claims 1 to 7, wherein the PCell is considered always activated.

9. The method of any one of claims 1 to 8, wherein an SCell may be activated or deactivated via an Activation/Deactivation Medium Access Control, in the following also referred to as MAC, control element, in the following also referred to as CE.

10. A communication device for inter-band carrier aggregation in a User Equipment, in the following also referred to as UE, in Time Division Duplex, in the following also referred to as TDD, mode, the communication device comprising:
a control circuit (306);
a processor (308) installed in the control circuit (306);
a memory (310) installed in the control circuit (306) and coupled to the processor (308);
wherein the processor (308) is configured to execute a program code (312) stored in memory (310) which, when being executed, causes said processor (308) to carry out a method for inter-band carrier aggregation as defined in anyone of the preceeding claims.

## Patentansprüche

1. Verfahren für Trägeraggregation zwischen Bändern in einem Anwendergerät, welches im Folgenden auch als UE bezeichnet wird, im Zeitduplexverfahren-Modus, wobei Zeitduplexverfahren im Folgenden auch als TDD bezeichnet wird, aufweisend:
• Verbinden des UE mit einer primären dienenden Zelle, welche im Folgenden auch als P-Zelle bezeichnet wird, (505);
• Konfigurieren des UE mit mindestens einer sekundären dienenden Zelle, welche im Folgenden auch als S-Zelle bezeichnet wird, von welchen mindestens eine S-Zelle deaktiviert ist, wobei TDD-uplink-downlink-Konfigurationen der P-Zelle und der mindestens einen S-Zelle verschieden sein können (510), wobei uplink-downlink im Folgenden auch als UL-DL bezeichnet wird; und
• Berücksichtigen einer TDD-UL-DL-Konfiguration einer aktivierten dienenden Zelle zum Definieren von aufeinanderfolgenden Teilrahmen eines drx-Inaktivitätstimers eines physikalischen Downlink-Steuerungskanals, wobei der physikalische Downlink-Steuerungskanal im Folgenden auch als PDCCH bezeichnet wird, und nicht Berücksichtigen einer TDD-UL-DL-Konfiguration einer deaktivierten dienenden Zelle (515), wobei PDCCH-Teilrahmen zum Definieren des drx-Inaktivitätstimers gleich einer Verbindung aus PDCCH-Teilrahmen aller aktivierten dienenden Zellen sind.

2. Verfahren nach Anspruch 1, wobei die zum Definieren der aufeinanderfolgenden PDCCH-Teilrahmen des drx-Inaktivitätszeitgebers berücksichtigte aktivierte dienende Zelle mit einem PDCCH konfiguriert ist.

3. Verfahren nach Anspruch 1 oder 2, ferner aufweisend:
• Definieren aufeinanderfolgender PDCCH-Teilrahmen eines *Einschaltdauerzeitgebers* basierend auf einer TDD-UL-DL-Konfiguration der P-Zelle.

4. Verfahren nach einem der Ansprüche 1 bis 3, ferner aufweisend:
• Definieren aufeinanderfolgender PDCCH-Teilrahmen eines drx-Sendewiederholungstimers basierend auf einer TDD-UL-DL-Konfiguration einer dienenden Zelle, welche einen mit dem drx-Sendewiederholungstimer assoziierten HARQ-Prozess aufweist.

5. Verfahren nach einem der Ansprüche 1 bis 3, ferner aufweisend:
• Definieren aufeinanderfolgender PDCCH-Teilrahmen eines drx-Sendewiederholungstimers basierend auf einer TDD-UL-DL-Konfiguration einer Zeitplanungszelle einer dienenden Zelle, welche einen mit dem drx-Sendewiederholungstimer assoziierten HARQ-Prozess aufweist.

6. Verfahren nach Anspruch 4, wobei der drx-Sendewiederholungstimer angehalten wird, wenn die entsprechende S-Zelle deaktiviert wird.

7. Verfahren nach Anspruch 5, wobei der drx-Sendewiederholungstimer angehalten wird, wenn die Zeitplanungszelle deaktiviert wird.

8. Verfahren nach einem der Ansprüche 1 bis 7, wobei die P-Zelle als immer aktiviert betrachtet wird.

9. Verfahren nach einem der Ansprüche 1 bis 8, wobei eine S-Zelle mittels eines Aktivierungs-/Deaktivierungs-Medienzugriffssteuerungs-Steuerungselements aktiviert oder deaktiviert werden kann, wobei Steuerungselement im Folgenden auch als CE bezeichnet wird und Medienzugriffssteuerung im Folgenden auch als MAC bezeichnet wird.

10. Kommunikationsvorrichtung für Trägeraggregation zwischen Bändern in einem Anwendergerät, welches im Folgenden auch als UE bezeichnet wird, im Zeitduplexverfahren-Modus, wobei Zeitduplexverfahren im Folgenden auch als TDD bezeichnet wird, wobei die Kommunikationsvorrichtung aufweist:
• eine Steuerungsschaltung (306);
• einen Prozessor (308), welcher in der Steuerungsschaltung (306) eingebaut ist;
• einen Speicher (310), welcher in der Steuerungsschaltung (306) eingebaut und mit dem Prozessor (308) gekoppelt ist;
• wobei der Prozessor (308) so konfiguriert ist, dass er einen in dem Speicher (310) gespeicherten Programmcode (312) ausführt, welcher, wenn er ausgeführt wird, verursacht, dass der Prozessor (308) ein Verfahren für Trägeraggregation zwischen Bändern wie in einem der vorstehenden Ansprüche definiert durchführt.

## Revendications

1. Procédé pour l'agrégation de porteuses inter-bande dans un Équipement Utilisateur, ci-après également dénommé UE, en mode Duplexage par Répartition dans le Temps, ci-après également dénommé TDD, comprenant le fait :
de connecter l'UE à une Cellule de Desserte Primaire, ci-après également dénommée PCell, (505) ;
de configurer l'UE avec au moins une Cellule de Desserte Secondaire, ci-après également dénommée SCell, parmi lesquelles au moins une SCell est désactivée, dans lequel des configurations de Liaison Montante-Liaison Descendante, ci-après également dénommée UL-DL, de TDD de la PCell et de la au moins une SCell peuvent être différentes (510) ; et
de prendre en considération une configuration UL-DL TDD d'une cellule de desserte activée pour définir des sous-trames consécutives de Canal de Commande de Liaison Descendante Physique, ci-après également dénommé PDCCH, d'un *Temporisateur d'Inactivité drx,* et de ne pas prendre en considération une configuration UL-DL TDD d'une cellule de desserte désactivée (515), dans lequel les sous-trames PDCCH pour définir le *Temporisateur d'Inactivité drx* sont égales à une union de sous-trames PDCCH de toutes les cellules de desserte activées.

2. Procédé de la revendication 1, dans lequel la cellule de desserte activée prise en considération pour définir des sous-trames PDCCH consécutives du *Temporisateur d'Inactivité drx* est configurée avec un PDCCH.

3. Procédé des revendications 1 ou 2, comprenant en outre le fait :
de définir des sous-trames PDCCH consécutives d'un *Temporisateur de Durée d'activité* sur la base d'une configuration UL-DL TDD de la PCell.

4. Procédé de l'une quelconque des revendications 1 à 3, comprenant en outre le fait :
de définir des sous-trames PDCCH consécutives d'un *Temporisateur de Retransmission drx* sur la base d'une configuration UL-DL TDD d'une cellule de desserte qui possède un processus HARQ associé au *Temporisateur de Retransmission drx.*

5. Procédé de l'une quelconque des revendications 1 à 3, comprenant en outre le fait :
de définir des sous-trames PDCCH consécutives d'un *Temporisateur de Retransmission drx* sur la base d'une configuration UL-DL TDD d'une cellule de programmation d'une cellule de desserte qui possède un processus HARQ associé au *Temporisateur de Retransmission drx.*

6. Procédé de la revendication 4, dans lequel le *Temporisateur de Retransmission drx* est arrêté lorsque la SCell correspondante est désactivée.

7. Procédé de la revendication 5, dans lequel le *Temporisateur de Retransmission drx* est arrêté lorsque la cellule de programmation est désactivée.

8. Procédé de l'une quelconque des revendications 1 à 7, dans lequel la PCell est considérée comme toujours activée.

9. Procédé de l'une quelconque des revendications 1 à 8, dans lequel une SCell peut être activée ou désactivée par l'intermédiaire d'un Contrôle d'Accès au Support d'Activation/Désactivation, ci-après également dénommé MAC, élément de commande, ci-après également dénommé CE.

10. Dispositif de communication pour l'agrégation de porteuses inter-bande dans un Équipement Utilisateur, ci-après également dénommé UE, en mode Duplexage par Répartition dans le Temps, ci-après également dénommé TDD, le dispositif de communication comprenant :
un circuit de commande (306) ;
un processeur (308) installé dans le circuit de commande (306) ;
une mémoire (310) installée dans le circuit de commande (306) et couplée au processeur (308) ;
dans lequel le processeur (308) est configuré pour exécuter un code de programme (312) stocké dans la mémoire (310) qui, lorsqu'il est exécuté, amène ledit processeur (308) à mettre en oeuvre un procédé pour l'agrégation de porteuses inter-bande tel que défini dans l'une quelconque des revendications précédentes.
